# EUROPÄISCHE PATENTSCHRIFT

(11) **EP 4 325 183 B1**
(45) Veröffentlichungstag und Bekanntmachung des Hinweises auf die Patenterteilung: **23.09.2026**
(21) Anmeldenummer: 24150772.2
(22) Anmeldetag: 16.08.2013
(51) Int. Cl.: G01J 5/08, G01J 5/34, G01J 5/00, G01J 1/06, G01J 1/02, G01J 5/0831, G01J 5/0875, G01J 5/07

(54) **SENSORSYSTEM ZUM ERKENNEN EINER BEWEGUNG EINER INFRAROTLICHTQUELLE**
SENSOR SYSTEM FOR DETECTING A MOVEMENT OF AN INFRARED LIGHT SOURCE
SYSTÈME DE CAPTEUR POUR DÉTECTER UN MOUVEMENT D'UNE SOURCE DE LUMIÈRE INFRAROUGE

(30) Priorität: 22.08.2012 DE 102012107739
(43) Veröffentlichungstag der Anmeldung: 21.02.2024
(62) Dokumentnummer(n) der früheren Anmeldung(en) nach Art. 76 EPÜ: 13750329.8 / 2 888 569
(73) Patentinhaber: Avago Technologies International Sales Pte. Limited, Singapore 768923 (SG)
(72) Erfinder: Wojtczuk, Piotr, Edinburgh, EH11 1DY (GB); Giebeler, Carsten, Edinburgh, EH32 0PE (GB); Binnie, David, Edinburgh, EH10 5UY (GB)
(74) Vertreter: Dilg, Haeusler, Schindelmann Patentanwaltsgesellschaft mbH

(56) Entgegenhaltungen:
- EP-A1- 0 588 073
- EP-A1- 1 357 393
- EP-A2- 2 463 751
- WO-A1-2012/032753
- DE-A1- 19 548 578
- DE-A1- 3 832 428
- US-A1- 2009 302 220
- US-A1- 2012 200 486

## Beschreibung

Die Erfindung betrifft ein Sensorsystem zum Erkennen einer Bewegung einer Infrarotlichtquelle.

Zur Mensch-Computer-Interaktion sind interaktive Systeme und deren Mensch-Maschine-Schnittstellen bekannt, die mit einer Einrichtung zur automatischen Erkennung von durch Menschen ausgeführten Gesten ausgestattet sind. Die Geste kann prinzipiell von jeder Körperhaltung und jeder Körperbewegung abgeleitet werden, wobei die größte Bedeutung Handgesten haben. Die Gestenerkennungseinrichtung ist mit einem Gerät zur optischen Erfassung insbesondere der gestikulierenden Hand ausgestattet, wobei die dadurch erzeugten Bildinformationen mit entsprechenden Algorithmen ausgewertet werden, um eine Geste aus den Bildinformationen abzuleiten. Das Gerät zur optischen Erfassung ist herkömmlich eine Kamera, die nachteilig einen großen Bauraum einnimmt und hohe Investitionskosten hat. Dadurch sind kamerabasierte Einrichtungen zur Gestenerkennung in miniaturisierter Bauweise bei günstigen Kosten, wie es etwa für die Anwendung in Mobiltelefonen vorteilhaft wäre, nicht zu realisieren. Außerdem haben kamerabasierte Einrichtungen nachteilig einen hohen Energieverbrauch, wodurch mobile Anwendungen nur schwer umzusetzen sind. Alternativ sind Hochgeschwindigkeitsspektrometer bekannt, die hinsichtlich der miniaturisierten Bauweise bei geringen Kosten keine Abhilfe schaffen können. Ferner sind sensorbasierte Systeme bekannt, die jedoch bezüglich ihrer begrenzten Auflösungsgenauigkeit eine nur unbefriedigende Qualität der Gestenerkennung ermöglichen und hinsichtlich ihres hohen Energieverbrauchs für mobile Anwendungen nur bedingt geeignet sind.

DE 195 48 578 A1 offenbart einen positionsselektiven passiven Infrarot-Intrusion-Sensor. EP 1 357 393 A1 offenbart eine Vorrichtung zur Ermittlung des Einfallwinkels einer Strahlung. WO 2012/032753 A1 offenbart einen optischen Sensor. DE 38 32 428 A1 offenbart eine Personen-Erfassungsvorrichtung. US 2009/0302220 A1 offenbart einen passiven Infrarotsensor. EP 2 463 751 A2 offenbart eine Gestenerkennungsvorrichtung. US 2012/0200486 A1 offenbart eine Gestenerkennungsvorrichtung.

Aufgabe der Erfindung ist es, ein Sensorsystem zum Erkennen einer Bewegung zu schaffen, wobei das Sensorsystem einen kleinen Bauraum, eine hohe Auflösungsgenauigkeit für eine Gestenerkennung, eine geringe Leistungsaufnahme und geringe Kosten hat.

Die Aufgabe wird gelöst mit den Merkmalen des Patentanspruchs 1. Bevorzugte Ausgestaltungen dazu sind in den weiteren Patentansprüchen angegeben.

Das erfindungsgemäße Sensorsystem zum Erkennen einer Bewegung in eine vorherbestimmte Bewegungsrichtung einer Infrarotlichtquelle weist mindestens ein Infrarotlichtsensorpaar bestehend aus zwei Infrarotlichtsensoren auf, die nebeneinanderliegend bezüglich der Bewegungsrichtung angeordnet und dadurch eine Sensorüberdeckungsstrecke definieren, die durch den Abstand der voneinander abgewandten Enden der Infrarotlichtsensoren bezüglich der Bewegungsrichtung bestimmt ist, sowie derart eingereicht sind, dass sie bei der Bestrahlung mit der Infrarotlichtquelle für das Erkennen der Bewegung der Infrarotlichtquelle elektrische Signale abgreifbar zur Verfügung stellen, deren Ladungsvorzeichen gegensätzlich sind, wobei das Sensorsystem ein Fenster zwischen den Infrarotlichtsensoren und der Infrarotlichtquelle aufweist, durch das das Infrarotlicht der Infrarotlichtquelle auf die Infrarotlichtsensoren durchstrahlbar ist und hinter dem die Infrarotlichtsensoren angeordnet sind sowie deren Anordnung und deren Erstreckung in die Bewegungsrichtung derart auf die Weite des Fensters abgestimmt sind, dass jenseits eines vorherbestimmten Grenzabstands weg vom Fenster die Infrarotlichtsensoren jeweils eine Vollbescheinungszone haben, die die Orte definiert, von denen aus die Infrarotlichtquelle lediglich einen der Infrarotlichtsensoren voll bescheint, wobei die Vollbescheinungszonen jenseits des Grenzabstands sich räumlich nicht überlappen und die Fensterweite in die Bewegungsrichtung kleiner als die Sensorüberdeckungsstrecke ist.

Bevorzugt ist es, dass die Sensorüberdeckungsstrecke beidseitig und gleich lang über das Fenster hinaussteht.

Ferner sind die Infrarotlichtsensoren bevorzugt derart eingerichtet, dass die Signale bei gleich starker Bestrahlung durch die Infrarotlichtquelle gleich stark sind. Die Infrarotlichtsensoren sind pyroelektrischer Natur, weisen bevorzugt Bleizirkonattitanat auf und sind gegensätzlich polarisiert. Bevorzugtermaßen sind die Infrarotlichtsensoren in Dünnschichtbauweise mit einem Sputter-Verfahren hergestellt.

Die Infrarotlichtsensoren weisen bevorzugt jeweils eine Signalleitung auf, mit denen die elektrischen Signale der Infrarotlichtsensoren abgreifbar sind, wobei die Signalleitungen an eine Signalsammelleitung des Sensorsystems angeschlossen sind. Es ist ferner bevorzugt, dass die Fensterweite in die Bewegungsrichtung zwischen 0,7 und 1-mal der Sensorüberdeckungsstrecke liegt, insbesondere zwischen 0,8 und 0,9.

Es ist außerdem bevorzugt, dass bezüglich der Erstreckung des Fensters von jedem Infrarotlichtsensor ein Sensoraußenrand und ein Sensorinnenrand sowie von dem Fenster ein dem Sensorinnenrand unmittelbar benachbarter erster Fensterrand und ein dem Sensoraußenrand unmittelbar benachbarter zweiter Fensterrand definiert sind, wobei die Gerade vom Sensorinnenrand zum ersten Fensterrand und die Sensornormale einen ersten Winkel sowie die Sensornormale und die Gerade vom Sensoraußenrand zum zweiten Fensterrand einen dritten Winkel einschließen, wobei die Differenz zwischen dem Absolutwert des ersten Winkels und dem Absolutwert des dritten Winkels größer als das Doppelte des Absolutwerts des dritten Winkels ist, insbesondere zwischen dem Zweifachen und dem Vierfachen des Absolutwerts des dritten Winkels.

Zusätzlich oder alternativ ist es bevorzugt, dass bezüglich der Erstreckung des Fensters von jedem Infrarotlichtsensor ein Sensoraußenrand und ein Sensorinnenrand sowie von dem Fenster ein dem Sensorinnenrand unmittelbar benachbarter erster Fensterrand und ein dem Sensoraußenrand unmittelbar benachbarter zweiter Fensterrand definiert sind, wobei die Gerade vom Sensorinnenrand zum zweiten Fensterrand und die Sensornormale einen zweiten Winkel sowie die Sensornormale und die Gerade vom Sensoraußenrand zum zweiten Fensterrand einen dritten Winkel einschließen, wobei der Absolutwert des dritten Winkels zwischen Null und dem Absolutwert des zweiten Winkels liegt, insbesondere wobei der Absolutwert des dritten Winkels zwischen Null und 0,5 des Absolutwerts des zweiten Winkels ist.

Bevorzugtermaßen weist das Sensorsystem zwei Infrarotlichtsensorpaare bestehend aus jeweils zwei der Infrarotlichtsensoren auf und das Fenster ist rechteckig, hinter dem die Infrarotlichtsensoren als ein Array symmetrisch zum Fenster angeordnet sind, wobei die Infrarotlichtsensoren des einen Infrarotlichtsensorpaars auf der einen Diagonale des Fensters und die Infrarotlichtsensoren des anderen Infrarotlichtsensorpaars auf der anderen Diagonale des Fensters angeordnet sind, so dass entweder die eine Diagonale oder die andere Diagonale die Bewegungsrichtung definieren.

Ferner ist es bevorzugt, dass die Infrarotlichtsensoren und das Fenster derart eingerichtet sind, dass, wenn die Infrarotlichtquelle eine menschliche Hand ist, die Infrarotlichtsensoren bei der Bestrahlung mit der Hand für das Erkennen der Bewegung der Hand die elektrischen Signale abgreifbar zur Verfügung stellen.

Werden die Infrarotlichtsensoren von der Infrarotlichtquelle jeweils mit Infrarotlicht bestrahlt, haben die elektrischen Signale, die an den Infrarotlichtsensoren abgreifbar sind, gegensätzliche Ladungsvorzeichen. Dies wird dadurch erreicht, dass die Infrarotlichtsensoren pyroelektrsicher Natur sind (sie weisen bevorzugt Bleizirkonattitanat auf) und gegensätzlich polarisiert sind. Beim Bewegen der Infrarotlichtquelle in die Bewegungsrichtung an den Infrarotlichtsensoren vorbei ist es vorgesehen, dass die Bewegung jenseits des Grenzabstands sich vollzieht. Zwischen den Orten, an denen die Infrarotlichtquelle sich befindet, und den Infrarotlichtsensoren ist das Fenster angeordnet, wobei der Bereich vom Fenster weg bis zum Grenzabstand sich dadurch auszeichnet, dass sich die Vollbescheinungszonen der Infrarotlichtsensoren überlappen. Die Sensorüberdeckungsstrecke, die Weite des Fensters, der Abstand zwischen dem Fenster und den Infrarotlichtsensoren sowie der Grenzabstand sind derart aufeinander abgestimmt, dass die Bewegung der Infrarotlichtquelle an dem Sensorsystem vorbei in einer für das Sensorsystem sinnvollen Anwendung erfolgen kann. Dadurch, dass die Bewegung der Infrarotlichtquelle jenseits des Grenzabstands sich vollzieht, ist zumindest bei der Infrarotlichtquelle mit punktueller Erstreckung erreicht, dass, je nachdem in welcher der Vollbescheinungszonen die Infrarotlichtquelle sich befindet, entweder an dem einen Infrarotlichtsensor oder an dem anderen Infrarotlichtsensor das Signal abgreifbar zur Verfügung steht.

Beim Vorbeibewegen der Infrarotlichtquelle in die Bewegungsrichtung und jenseits des Grenzabstands taucht die Infrarotlichtquelle zuerst in die Vollbescheinungszone des vorwärtigen Infrarotlichtsensors ein. Nachdem die Infrarotlichtquelle diese Vollbescheinungszone passiert hat, tritt die Infrarotlichtquelle aus dieser Vollbescheinungszone aus. Befindet sich die Infrarotlichtquelle genau im Grenzabstand weg vom Fenster, so taucht die Infrarotlichtquelle sofort in die Vollbescheinungszone des rückwärtigen Infrarotlichtsensors ein, wobei die entsprechenden Begrenzungen der Vollbescheinungszonen sich am Grenzabstand schneiden. Dieser Schnittpunkt liegt symmetrisch im Grenzabstand weg vom Fenster und über den Infrarotlichtsensoren. Die Vollbescheinungszonen jenseits des Grenzabstands überlappen sich räumlich nicht und die Fensterweite in die Bewegungsrichtung ist kleiner als die Sensorüberdeckungsstrecke. Findet die Bewegung der Infrarotlichtquelle jenseits des Grenzabstands statt, so taucht die Infrarotlichtquelle, nachdem sie aus der Vollbescheinungszone des vorwärtigen Infrarotlichtsensors ausgetreten ist, nicht sofort in die Vollbescheinungszone des rückwärtigen Infrarotlichtsensors ein und befindet sich in einem Zwischenbereich, in dem weder sich die Vollbescheinungszone des rückwärtigen Infrarotlichtsensors noch die Vollbescheinungszone des vorwärtigen Infrarotlichtsensors erstreckt. Nach Passieren dieses Zwischenbereichs taucht die Infrarotlichtquelle in die Vollbescheinungszone des rückwärtigen Infrarotlichtsensors ein und wird in dieser weiter bewegt, bis sie aus dieser Vollbescheinungszone austritt. Dadurch durchstreift die Infrarotlichtquelle beide Vollbescheinungszonen, wobei die Infrarotlichtquelle entweder in keiner der Vollbescheinungszonen sich befindet oder in einer einzigen der Vollbescheinungszonen angeordnet ist. Dadurch wird erreicht, dass die Differenz der elektrischen Signale, die an den Infrarotlichtsensoren abgreifbar zur Verfügung stehen, groß ist, wodurch das Signal-Rausch-Verhältnis des Sensorsystems groß ist. Somit hat das Sensorsystem eine hohe Sensitivität, wodurch mit dem Sensorsystem die Bewegung der Infrarotlichtquelle mit einer Auswertung der elektrischen Signale zuverlässig erkennbar ist.

Ferner hat das Sensorsystem vorteilhaft eine geringe Leistungsaufnahme, die im Mikro-Wattbereich liegen kann. Dadurch ist das Sensorsystem geeignet in mobilen Anwendungen eingesetzt zu werden, da für die Stromversorgung des Sensorsystems keine großen, schweren und teuren Aggregate vorgesehen zu werden brauchen. Die bevorzugte Array-Anordnung der beiden Infrarotlichtsensorpaare führt vorteilhafterweise dazu, dass die das Sensorsystem mit einer Leistungsaufnahme im Mikro-Wattbereich betreibbar ist.

Im Folgenden wird eine bevorzugte Ausführungsform des erfindungsgemäßen Sensorsystems anhand der beigefügten schematischen Zeichnungen erläutert. Es zeigen:
Figur 1 einen schematischen Querschnitt durch das Sensorsystem;
Figur 2 eine Detailansicht von Figur 1 und
Figur 3 eine Draufsicht des Sensorsystems.

Wie es aus den Figuren ersichtlich ist, weist ein Sensorsystem 1 eine Membran 2 und einen Rahmen 3 auf. Der Rahmen 3 begrenzt die Membran 2, die von dem Rahmen 3 aufgespannt ist und als Substrat für einen ersten Infrarotlichtsensor 4 und einen zweiten Infrarotlichtsensor 5 vorgesehen ist.

Die Infrarotlichtsensoren 4, 5 sind auf Basis von Bleizirkonattitanat hergestellt und gegensätzlich polarisiert, so dass, wenn die Infrarotlichtsensoren 4, 5 von Infrarotlicht bestrahlt werden, an ihnen elektrische Signale mit unterschiedlichen Ladungsvorzeichen abgreifbar sind. Die Polarisierung des ersten Infrarotlichtsensors 4 ist mit (+) und die Polarisierung des zweiten Infrarotlichtsensors 5 ist mit
(-) gekennzeichnet. Die Infrarotlichtsensoren 4, 5 sind derart ausgebildet, dass, wenn sie mit Infrarotlicht gleicher Intensität und Frequenz bestrahlt werden, ihre Signalstärken gleich groß sind.

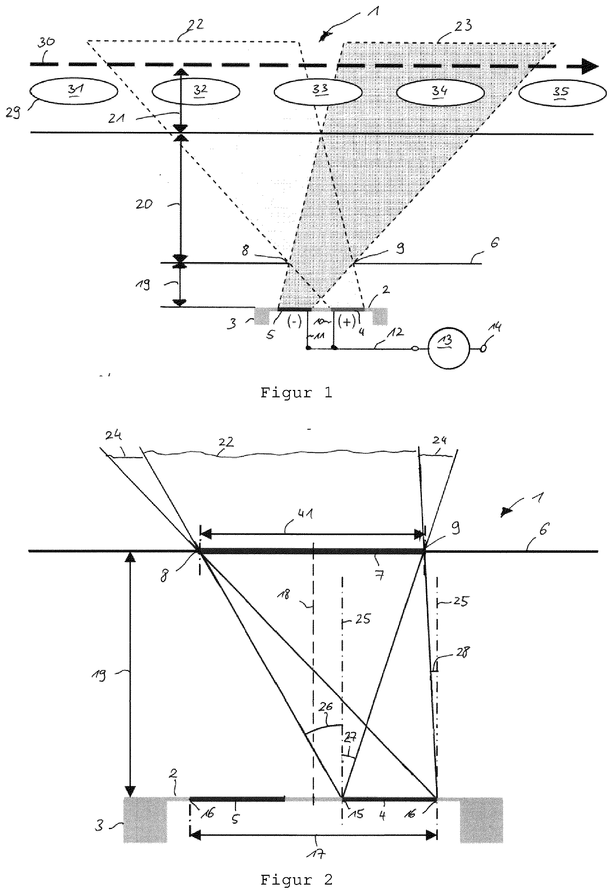

An derjenigen Seite der Infrarotlichtsensoren 4, 5, von der die Bestrahlung der Infrarotlichtsensoren 4, 5 vorgesehen ist, ist eine Abdeckung 6 angeordnet, die ein Fenster 7 aufweist. Das Fenster 7 ist in Figuren 1 und 2 links von einem ersten Fensterrand 8 und rechts von einem zweiten Fensterrand 9 begrenzt.

Zum Abgreifen der elektrischen Signale der Infrarotlichtsensoren 4, 5 ist an dem ersten Infrarotlichtsensor 4 eine erste Signalleitung 10 und an dem zweiten Infrarotlichtsensor 5 eine zweite Signalleitung 11 elektrisch leitend angeschlossen, wobei die Signalleitungen 10, 11 in eine Signalsammelleitung 12 zusammengeführt sind. Dadurch sind an der Signalsammelleitung 12 die Signale der Infrarotlichtsensoren 4, 5 als ein Summensignal abgreifbar. An der Signalsammelleitung 12 ist eine Signalaufbereitungseinheit 13 angeschlossen, zu der das Summensignal gespeist wird. Für Ausgabezwecke ist an der Signalaufbereitungseinheit 13 ein Signalausgang 14 vorgesehen.

Die Infrarotlichtsensoren 4, 5 sind auf der Membran 2 im Abstand nebeneinander angeordnet, wobei an den einander zugewandten Seiten der Infrarotlichtsensoren 4, 5 jeweils ein Sensorinnenrand 15 definiert ist. An dem den Sensorinnenrand 15 abgewandten Rand der Infrarotlichtsensoren 4, 5 ist jeweils ein Sensoraußenrand 16 definiert. Der Abstand zwischen den Sensoraußenrändern 16 der Infrarotlichtsensoren 4, 5 ist als eine Sensorüberdeckungsstrecke 17 bezeichnet. Mittig zwischen den Sensorinnenrändern 15 und senkrecht zur Membran 2 ergibt sich eine Symmetrieachse 18.

Das Fenster 7 erstreckt sich parallel zur Membran 2 und ist im Abstand zu den Infrarotlichtsensoren 4, 5 angeordnet, der als ein Fensterabstand 19 bezeichnet ist. Jenseits des Fensterabstands 19 weg von den Infrarotlichtsensoren 4, 5 ist ein Grenzabstand 20 definiert, ab dem eine Bewegung einer Infrarotlichtquelle 29 stattfinden soll, wobei die Bewegung von dem Sensorsystem 1 zu detektieren ist. Die Bewegung der Infrarotlichtquelle 29 ist von einem Bewegungsabstand 21, der den Abstand zwischen der Infrarotlichtquelle 29 und dem Grenzabstand 20 bezeichnet, und einer Bewegungsrichtung 30, definiert, die entlang der Sensorüberdeckungsstrecke 17 sich erstreckt.

Aus der Lage des ersten Fensterrands 8, des zweiten Fensterrands 9 und der Sensorinnenränder 15 und der Sensoraußenränder 16 ergibt sich für den ersten Infrarotlichtsensor 4 eine erste Vollbescheinungszone 22 und für den zweiten Infrarotlichtsensor 5 eine zweite Vollbescheinungszone 23. Die Vollbescheinungszonen 22, 23 sind von allen denkbaren Orten von punktförmigen Infrarotlichtquellen definiert, von denen aus die Infrarotlichtsensoren 4, 5 von den Infrarotlichtquellen voll beschienen werden. Das heißt, befindet sich die punktförmige Infrarotlichtquelle in der ersten Vollbescheinungszone 22, so wird von ihr immer der erste Infrarotlichtsensor 4 voll beschienen und der zweite Infrarotlichtsensor 5 wird nicht oder nicht voll beschienen. In analoger Weise wird der zweite Infrarotlichtsensor 6 von Infrarotlichtquellen voll beschienen und der erste Infrarotlichtsensor 4 wird nicht oder nicht voll beschienen, wenn die Infrarotlichtquellen sich in der zweiten Vollbescheinungszone 23 befinden. Außerhalb der ersten Vollbescheinungszone 22 befindet bezüglich des ersten Infrarotlichtsensors 4 eine Teilbescheinungszone 24 und außerhalb der zweiten Vollbescheinungszone 23 befindet sich hinsichtlich des zweiten Infrarotlichtsensors 5 eine Teilbescheinungszone. Liegt die Infrarotlichtquelle in einer der Teilbescheinungszonen, wird der zugeordnete Infrarotlichtsensor 5, 6 nicht voll beschienen.

Eine Sensornormale 25 steht senkrecht zu der Oberfläche der Infrarotlichtsensoren 4, 5, die dem Fenster 7 zugewandt ist. Im Folgenden werden Winkel für den ersten Infrarotlichtsensor 4 definiert. Zwischen der Sensornormalen 25 am Sensorinnenrand 15 und der Gerade zwischen dem ersten Fensterrand 8 und dem Sensorinnenrand 15 ist ein erster Winkel 26 eingeschlossen. Von der Sensornormalen 25 am Sensorinnenrand 15 zur Gerade zwischen dem Sensorinnenrand 15 und dem zweiten Fensterrand 9 ist ein zweiter Winkel 27 eingeschlossen. Zwischen der Sensornormalen 25 am Sensoraußenrand 16 und der Gerade zwischen dem Sensoraußenrand 16 und dem zweiten Fensterrand 9 ist ein dritter Winkel 28 eingeschlossen. Die Definitionen für die Winkel 26 bis 28 gelten in analoger Weise auch für den zweiten Infrarotlichtsensor 5. Dadurch, dass die Infrarotlichtsensoren 4 ,5 in die Bewegungsrichtung 30 gleich breit vorgesehen sind und das Fenster 7 symmetrisch um die Symmetrieachse 18 angeordnet ist, sind die Winkel 26 bis 28 des ersten Infrarotlichtsensors 4 gleich groß wie die entsprechenden Winkel 26 bis 28 des zweiten Infrarotlichtsensors 5.

Das Sensorsystem 1 ist eingerichtet eine Bewegung der Infrarotlichtquelle 29 im Bewegungsabstand 21 und in die Bewegungsrichtung 30 mit Hilfe der Infrarotlichtsensoren 4, 5 und der Signalaufbereitungseinheit 13 zu identifizieren. Bei der Bewegung der Infrarotlichtquelle 29 wird diese aus einer ersten Position 31, in eine zweite Position 32, in eine dritte Position 33, in eine vierte Position 34 zu einer fünften Position 35 bewegt. Die erste Position 31 befindet sich außerhalb der ersten Vollbescheinungszone 22. Die zweite Position 32 befindet sich vollständig innerhalb der ersten Vollbescheinungszone 22. Die dritte Position 33 befindet sich auf der Symmetrieachse 18, wobei ihre Mitte zwischen der ersten Vollbescheinungszone 22 und der zweiten Vollbescheinungszone 23 angeordnet ist. Die vierte Position 34 befindet sich vollständig innerhalb der zweiten Vollbescheinungszone 23. Die fünfte Position 35 befindet sich vollständig außerhalb der zweiten Vollbescheinungszone 23. Bei der Bewegung der Infrarotlichtquelle 29 von der ersten Position 31 zur zweiten Position 32 tritt die Infrarotlichtquelle 29 in die erste Vollbescheinungszone 22 ein und tritt beim Wechsel von der zweiten Position 32 zur dritten Position 33 aus der ersten Vollbescheinungszone 22 aus. Beim Bewegen von der dritten Position 33 zur vierten Position 34 taucht die Infrarotlichtquelle 29 in die zweite Vollbescheinungszone 23 ein und tritt beim Wechsel von der vierten Position zur fünften Position 35 aus der zweiten Vollbescheinungszone 23 aus. In der ersten Position 31 wird weder der erste Infrarotlichtsensor 4 noch der zweite Infrarotlichtsensor 5 von der Infrarotlichtquelle 29 voll beschienen, da die Infrarotlichtquelle 29 sich weder in der ersten Vollbescheinungszone 22 noch in der zweiten Vollbescheinungszone 23 befindet. In der zweiten Position 32 wird der erste Infrarotlichtsensor 4 voll beschienen, wobei der zweite Infrarotlichtsensor 5 nicht voll beschienen wird.

Aufgrund der räumlichen Erstreckung der Infrarotlichtquelle 29 in die Bewegungsrichtung 30 erstreckt sich die Infrarotlichtquelle 29 in der dritten Position 33 sowohl inerhalb der ersten Vollbescheinungszone 22 als auch innerhalb der zweiten Vollbescheinungszone 23. Dadurch werden sowohl der erste Infrarotlichtsensor 4 als auch der zweite Infrarotlichtsensor 5 leicht beschienen. Ist die Infrarotlichtquelle 29 in ihrer räumlichen Erstreckung derart klein ausgebildet und/oder ist der Bewegungsabstand 21 entsprechend groß gewählt, dass die Infrarotlichtquelle 29 sich in der dritten Position 33 vollständig zwischen den Vollbescheinungszonen 22, 23 befindet, so wird keine der Vollbescheinungszonen 22, 23 von der Infrarotlichtquelle 29 voll beschienen.

Das Sensorsystem 1 zum Erkennen der Bewegung in die Bewegungsrichtung 30 der Infrarotlichtquelle 29 im Bewegungsabstand 21 hat ein hohes Signal-Rausch-Verhältnis. Dies wird dadurch erreicht, dass das Sensorsystem 1 die insbesondere folgenden geometrischen Merkmale aufweist: Die Fensterweite 41 liegt zwischen dem 0,8 und dem 0,9-fachen der Sensorüberdeckungsstrecke. Die Differenz zwischen dem Absolutwert des ersten Winkels 26 und dem Absolutwerts des dritten Winkels 28 ist größer als das Doppelte des Absolutwerts des dritten Winkels 28. Der Absolutwert des dritten Winkels 28 ist kleiner als der Absolutwert des zweiten Winkels 27. Die gewählten absoluten Werte der Winkel 26 bis 28 und der Abstände 19 bis 21 hängen von der Art und Größe der Infrarotlichtquelle 29 ab. Die Infrarotlichtquelle 29 ist beispielsweise eine menschliche Hand. Insbesondere der Absolutwert des dritten Winkels 28 und der Grenzabstand 20 sowie der Bewegungsabstand 21 sind so aufeinander abgestimmt, dass im Hinblick auf die Abmaße der Hand, die Energie der Infrarotlichtabstrahlung der Hand und die Sensitivität der Infrarotlichtsensoren 4 und 5 das Sensorsystem 1 ein möglichst großes Signal-Rausch-Verhältnis hat. Dies wird insbesondere dadurch erreicht, dass in der dritten Position 33 die Hand eine möglichst geringe gleichzeitige Überlappung mit der ersten Vollbescheinungszone 22 und der zweiten Vollbescheinungszone 23 hat. Außerdem sind die Fensterweite 17 und die Lage der Fensterränder 8, 9 auf den Fensterabstand 19 und die Sensorüberdeckungsstrecke 17 derart abgestimmt, dass praktischen Erwägungen beim Einbau des Sensorsystems 1 in ein Anwendungsgerät entsprochen wird. Beispielsweise könnte der Fensterabstand 19 verkleinert werden bei einer entsprechenden Verkleinerung der Fensterweite 17, ohne dass die Lage der Vollbescheinungszonen 22, 23 sich ändern würde.

Bei der Bewegung der Hand von der ersten Position 31 via die Positionen 32 bis 34 zur fünften Position 35 wird in der Signalsammelleitung 12 ein sinusartiges Signal erzeugt, das zuerst eine negative und dann eine positive Amplitude hat. Die Signalaufbereitungseinheit 13 ist derart eingerichtet aus dem Signal die Bewegung in die Bewegungsrichtung zu erkennen und die Bewegungsrichtung 30 zu identifizieren. Erfolgt die Bewegung der Hand entgegen der Bewegungsrichtung 30, so hat das sinusartige Signal in der Signalsammelleitung 12 zuerst eine positive Amplitude und dann eine negative Amplitude, wobei die Signalaufbereitungseinheit 13 eingerichtet ist, eine Bewegung entgegen der Bewegungsrichtung 13 zu erkennen und die Richtung der Bewegung zu identifizieren.

Innerhalb des Grenzabstands 20 liegt eine Überlappung der Vollbescheinungszonen 22, 23 vor. Befindet sich beispielsweise die Infrarotlichtquelle 29 innerhalb dieser Überlappungszone, so werden der erste Infrarotlichtsensor 4 und der zweite Infrarotlichtsensor 5 beschienen. Somit wird von dem ersten Infrarotlichtsensor 4 das Signal mit negativem Ladungsvorzeichen und gleichzeitig von dem zweiten Infrarotlichtsensor 5 das Signal mit dem positiven Ladungsvorzeichen erzeugt. Dadurch, dass die Signalleitungen 10, 11 zu der Signalsammelleitung 12 zusammengeführt sind und die Signale der Infrarotlichtsensoren 4, 5 als Summensignal vorliegen heben, sich die Signale der Infrarotlichtsensoren 4, 5 aufgrund ihrer entgegengesetzten Ladungsvorzeichen auf. Dadurch ist mit dem Sensorsystem 1 ebenfalls ein hohes Signal-Rausch-Verhältnis erzielbar, wenn die Bewegung der Infrarotlichtquelle 29 innerhalb des Grenzabstands 20 liegt.

In Figuren 1 und 2 ist das Sensorsystem 1 mit seinen beiden Infrarotlichtsensoren 4, 5 dargestellt, die eine einzige Raumdimension der Bewegung der Infrarotlichtquelle 29 erkennen. Denkbar wäre das Sensorsystem 1 als eindimensionale Ausführung.

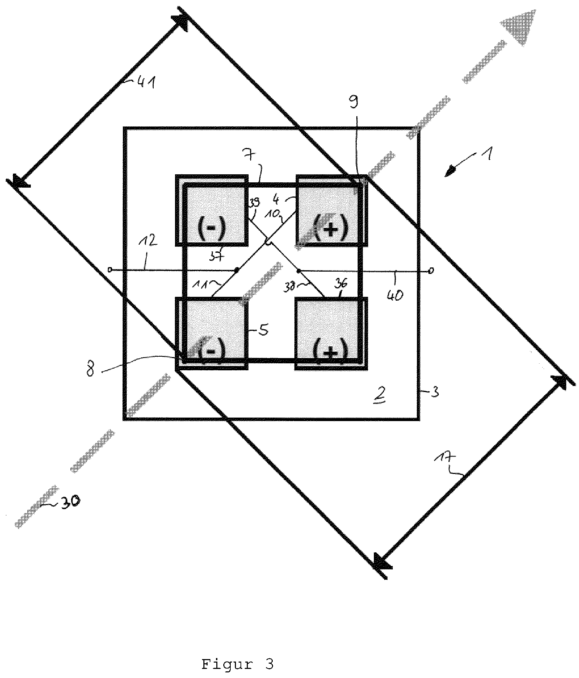

Gemäß Figur 3 weist das Sensorsystem 1 ferner einen dritten Infrarotlichtsensor 36 und einen vierten Infrarotlichtsensor 37 auf, wobei die Infrarotlichtsensoren 36, 37 senkrecht zur Bewegungsrichtung 30 ausgerichtet auf der Membran 2 angeordnet sind. Die Infrarotlichtsensoren 4, 5 und 36, 37 bilden ein Array und stellen eine zweidimensionale Ausführung dar. Die Sensorüberdeckungsstrecke 17 für die Infrarotlichtsensoren 4, 5 ist somit von der Diagonale des Arrays gebildet, auf der die die Infrarotlichtsensoren 4, 5 liegen. In analoger Weise ist für die Infrarotlichtsensoren 36, 37 eine Sensorüberdeckungsstrecke definiert. Das Fenster 7 ist rechteckig ausgebildet, wobei in der Draufsicht das Array sich über die Fensterränder 8, 9 erstreckt. Dadurch ist die Fensterweite 17 kleiner als die Sensorüberdeckungsstrecken.

Die Infrarotlichtsensoren 36, 37 weisen jeweils eine Signalleitung 38, 39 auf, die in einer zweiten Signalsammelleitung 40 zusammengeführt sind. Die Sensoren 36, 37 sind in analoger Art und Weise zu den Infrarotlichtsensoren 4, 5 dimensioniert und ausgelegt, so dass bei einer Bewegung der Infrarotlichtquelle 29 im Bewegungsabstand 21 senkrecht zur Bewegungsrichtung 30 ein entsprechendes elektrisches Signal an der zweiten Signalsammelleitung 40 anliegt.

Mit dem Sensorsystem 1 in der Arrayanordnung der Infrarotlichtsensoren 4, 5 und 36, 37 ist somit eine zweidimensionale Bewegung der Infrarotlichtquelle 29 im Bewegungsabstand 21 mit Hilfe der in den Signalsammelleitungen 12, 40 vorliegenden Signalen ermöglicht, die von der Signalaufbereitungseinheit 13 auswertbar sind. Die Signalaufbereitungseinheit 13 ist eingerichtet die Bewegungsrichtung der Infrarotlichtquelle 29 anhand den in den Signalsammelleitungen 12, 40 auftretenden Signalen zu erkennen. Ist beispielsweise die Bewegung parallel zur Bewegungsrichtung 30, wie sie in Figur 3 gezeigt ist, so liegt in der ersten Signalleitung 12 ein sinusförmiges Signal vor, das zuerst eine negative Amplitude und dann eine positive Amplitude hat. An der zweiten Signalsammelleitung 40 liegt kein Signal vor, da von den Infrarotlichtsensoren 36, 37 eventuell generierte Signale sich in der zweiten Signalsammelleitung 40 auslöschen. In analoger Weise kann bei entsprechender Kombination der Signale in den Signalsammelleitungen 12, 40 jede denkbare Bewegung der Infrarotlichtquelle 29 von dem Sensorsystem 1 erkannt werden. Ist die Infrarotlichtquelle 29 die Hand und die Bewegung eine Geste der Hand oder ein Bestandteil einer Geste, so ist mit dem Sensorsystem 1 die Geste erkennbar.

### Bezugszeichenliste

1 Sensorsystem
2 Membran
3 Rahmen
4 erster Infrarotlichtsensor
5 zweiter Infrarotlichtsensor
6 Abdeckung
7 Fenster
8 erster Fensterrand
9 zweiter Fensterrand
10 erste Signalleitung
11 zweite Signalleitung
12 Signalsammelleitung
13 Signalaufbereitungseinheit
14 Signalausgang
15 Sensorinnenrand
16 Sensoraußenrand
17 Sensorüberdeckungsstrecke
18 Symmetrieachse
19 Fensterabstand
20 Grenzabstand
21 Bewegungsabstand
22 erste Vollbescheinungszone
23 zweite Vollbescheinungszone
24 Teilbescheinungszone
25 Sensornormale
26 erster Winkel
27 zweiter Winkel
28 dritter Winkel
29 Infrarotlichtquelle
30 Bewegungsrichtung
31 erste Position
32 zweite Position
33 dritte Position
34 vierte Position
35 fünfte Position
36 dritter Infrarotlichtsensor
37 vierter Infrarotlichtsensor
38 dritte Signalleitung
39 vierte Signalleitung
40 zweite Signalsammelleitung
41 Fensterweite

## Patentansprüche

1. Sensorsystem zum Erkennen einer Bewegung in eine vorherbestimmte Bewegungsrichtung (30) einer Infrarotlichtquelle (29), mit mindestens einem Infrarotlichtsensorpaar bestehend aus zwei Infrarotlichtsensoren (4, 5; 36, 37), die nebeneinanderliegend bezüglich der Bewegungsrichtung (30) angeordnet sind und dadurch eine Sensorüberdeckungsstrecke (17) definieren, die durch den Abstand der voneinander abgewandten Enden (16) der Infrarotlichtsensoren (4, 5; 36, 37) bezüglich der Bewegungsrichtung (29) bestimmt ist, sowie derart eingerichtet sind, dass sie bei der Bestrahlung mit der Infrarotlichtquelle (29) für das Erkennen der Bewegung der Infrarotlichtquelle (29) elektrische Signale abgreifbar zur Verfügung stellen, deren Ladungsvorzeichen gegensätzlich sind, wobei das Sensorsystem (1) ein Fenster (7) zwischen den Infrarotlichtsensoren (4, 5; 36, 37) und der Infrarotlichtquelle (29) aufweist, durch das das Infrarotlicht der Infrarotlichtquelle (29) auf die Infrarotlichtsensoren (4, 5; 36, 37) durchstrahlbar ist und hinter dem die Infrarotlichtsensoren (4, 5; 36, 37) angeordnet sind sowie deren Anordnung und deren Erstreckung in die Bewegungsrichtung (29) derart auf die Weite (41) des Fensters (7) abgestimmt sind, dass jenseits eines vorherbestimmten Grenzabstands (20) weg vom Fenster (7) die Infrarotlichtsensoren (4, 5; 36, 37) jeweils eine Vollbescheinungszone (22, 23) haben, die die Orte definiert, von denen aus die Infrarotlichtquelle (29) lediglich einen der Infrarotlichtsensoren (4, 36 oder 5, 37) voll bescheint, wobei die Vollbescheinungszonen (22, 23) jenseits des Grenzabstands (20) sich räumlich nicht überlappen und die Fensterweite (41) in die Bewegungsrichtung (29) kleiner als die Sensorüberdeckungsstrecke (17) ist, wobei die Infrarotlichtsensoren (4, 5; 36, 37) pyroelektrischer Natur sind und gegensätzlich polarisiert sind.

2. Sensorsystem gemäß Anspruch 1, wobei die Sensorüberdeckungsstrecke (17) beidseitig und gleichlang über das Fenster (7) hinaussteht.

3. Sensorsystem gemäß Anspruch 1 oder 2, wobei die Infrarotlichtsensoren (4, 5; 36, 37) derart eingerichtet sind, dass die Signale bei gleichstarker Bestrahlung durch die Infrarotlichtquelle (29) gleichstark sind.

4. Sensorsystem gemäß einem der Ansprüche 1 bis 3, wobei die Infrarotlichtsensoren (4, 5; 36, 37) Bleizirkonattitanat aufweisen.

5. Sensorsystem gemäß einem der Ansprüche 1 bis 4, wobei die Infrarotlichtsensoren (4, 5; 36, 37) jeweils eine Signalleitung (10, 11; 38, 39) aufweisen, mit denen die elektrischen Signale der Infrarotlichtsensoren (4, 5; 36, 37) abgreifbar sind, wobei die Signalleitungen (10, 11; 38, 39) an eine Signalsammelleitung (12; 40) des Sensorsystems (1) angeschlossen sind.

6. Sensorsystem gemäß einem der Ansprüche 1 bis 5, wobei die Fensterweite (41) in die Bewegungsrichtung (29) zwischen 0,7 und 1-mal der Sensorüberdeckungsstrecke (17) liegt.

7. Sensorsystem gemäß Anspruch 6, wobei die Fensterweite (41) in die Bewegungsrichtung (29) zwischen 0,8 und 0,9 der Sensorüberdeckungsstrecke (17) liegt.

8. Sensorsystem gemäß einem der Ansprüche 1 bis 7, wobei bezüglich der Erstreckung des Fensters (7) von jedem Infrarotlichtsensor (4, 5; 36, 37) ein Sensoraußenrand (16) und ein Sensorinnenrand (15) sowie von dem Fenster (7) ein dem Sensorinnenrand (15) unmittelbar benachbarter erster Fensterrand (8) und ein dem Sensoraußenrand (16) unmittelbar benachbarter zweiter Fensterrand (9) definiert sind, wobei die Gerade vom Sensorinnenrand (15) zum ersten Fensterrand (8) und die Sensornormale (25) einen ersten Winkel (26) sowie die Sensornormale (25) und die Gerade vom Sensoraußenrand (16) zum zweiten Fensterrand (9) einen dritten Winkel (28) einschließen, wobei die Differenz zwischen dem Absolutwert des ersten Winkels (26) und dem Absolutwert des dritten Winkels (28) größer als das doppelte des Absolutwerts des dritten Winkels (28) ist.

9. Sensorsystem gemäß Anspruch 8, wobei die Differenz zwischen dem Absolutwert des ersten Winkels (26) und dem Absolutwert des dritten Winkels (28) zwischen dem zweifachen und dem vierfachen des Absolutwerts des dritten Winkels (28) liegt.

10. Sensorsystem gemäß einem der Ansprüche 1 bis 9, wobei bezüglich der Erstreckung des Fensters (7) von jedem Infrarotlichtsensor (4, 5; 36, 37) ein Sensoraußenrand (16) und ein Sensorinnenrand (15) sowie von dem Fenster (7) ein dem Sensorinnenrand (15) unmittelbar benachbarter erster Fensterrand (8) und ein dem Sensoraußenrand (16) unmittelbar benachbarter zweiter Fensterrand (9) definiert sind, wobei die Gerade vom Sensorinnenrand (15) zum zweiten Fensterrand (9) und die Sensornormale (25) einen zweiten Winkel (27) sowie die Sensornormale (25) und die Gerade vom Sensoraußenrand (16) zum zweiten Fensterrand (9) einen dritten Winkel (28) einschließen, wobei der Absolutwert des dritten Winkels (28) zwischen Null und dem Absolutwert des zweiten Winkels (27) liegt.

11. Sensorsystem gemäß Anspruch 10, wobei der Absolutwert des dritten Winkels (28) zwischen Null und 0,5 des Absolutwerts des zweiten Winkels (27) ist.

12. Sensorsystem gemäß einem der Ansprüche 1 bis 11, wobei das Sensorsystem (1) zwei Infrarotlichtsensorpaare bestehend aus jeweils zwei der Infrarotlichtsensoren (4, 5; 36, 37) aufweist und das Fenster (7) rechteckig ist, hinter dem die Infrarotlichtsensoren (4, 5; 36, 37) als ein Array symmetrisch zum Fenster (7) angeordnet sind, wobei die Infrarotlichtsensoren (4, 5) des einen Infrarotlichtsensorpaars auf der einen Diagonale des Fenster (7) und die Infrarotlichtsensoren (4, 5) des anderen Infrarotlichtsensorpaars auf der anderen Diagonale des Fensters (7) angeordnet sind, so dass entweder die eine Diagonale oder die andere Diagonale die Bewegungsrichtung (29) definieren.

13. Sensorsystem gemäß einem der Ansprüche 1 bis 12, wobei das Sensorsystem (1) eine Membran (2) und einen Rahmen (3) aufweist, wobei der Rahmen (3) die Membran (2) begrenzt und die Membran (2) von dem Rahmen (3) aufgespannt ist, wobei die Infrarotlichtsensoren (4, 5; 36, 37) auf der Membran (2) in Abstand nebeneinander angeordnet sind.

14. Sensorsystem gemäß einem der Ansprüche 1 bis 13, wobei die Infrarotlichtsensoren (4, 5; 36, 37) und das Fenster (7) derart eingerichtet sind, dass, wenn die Infrarotlichtquelle (29) eine menschliche Hand ist, die Infrarotlichtsensoren (4, 5; 36, 37) bei der Bestrahlung mit der Hand für das Erkennen der Bewegung der Hand die elektrischen Signale abgreifbar zur Verfügung stellen.

## Claims

1. A sensor system for detecting a movement in a predetermined direction of movement (30) of an infrared light source (29), with at least one pair of infrared light sensors consisting of two infrared light sensors (4, 5; 36, 37) which are arranged next to one another with respect to the direction of movement (30) and thereby define a sensor cover section (17) which is determined by the distance of the ends (16) of the infrared light sensors (4, 5; 36, 37) facing away from one another with respect to the direction of movement (29), and are adapted in such a way that, when irradiated with the infrared light source (29), they make electrical signals available for detecting the movement of the infrared light source (29), the charge signs of which are opposite, wherein the sensor system (1) comprises a window (7) between the infrared light sensors (4, 5; 36, 37) and the infrared light source (29), through which the infrared light of the infrared light source (29) can be radiated onto the infrared light sensors (4, 5; 36, 37) and behind which the infrared light sensors (4, 5; 36, 37) are arranged, and the arrangement and extent of which in the direction of movement (29) are matched to the width (41) of the window (7) in such a way that, beyond a predetermined limiting distance (20) away from the window (7), the infrared light sensors (4, 5; 36, 37) each have a full-irradiation zone (22, 23) which defines the locations from which the infrared light source (29) fully irradiates only one of the infrared light sensors (4, 36 or 5, 37), wherein the full-irradiation zones (22, 23) do not overlap spatially beyond the limiting distance (20) and the window width (41) in the direction of movement (29) is smaller than the sensor cover section (17), wherein the infrared light sensors (4, 5; 36, 37) are of a pyroelectric nature and are polarized opposite.

2. The sensor system according to claim 1, wherein the sensor cover section (17) projects beyond the window (7) on both sides and for the same length.

3. The sensor system according to claim 1 or 2, wherein the infrared light sensors (4, 5; 36, 37) are adapted such that the signals are equal when irradiated with equal intensity by the infrared light source (29).

4. The sensor system according to any one of claims 1 to 3, wherein the infrared light sensors (4, 5; 36, 37) comprise lead zirconate titanate.

5. The sensor system according to any one of claims 1 to 4, wherein the infrared light sensors (4, 5; 36, 37) each comprise a signal line (10, 11; 38, 39) by which the electrical signals of the infrared light sensors (4, 5; 36, 37) can be tapped, wherein the signal lines (10, 11; 38, 39) are connected to a signal collector line (12; 40) of the sensor system (1).

6. The sensor system according to any one of claims 1 to 5, wherein the window width (41) in the direction of movement (29) is between 0.7 and 1 times the sensor cover section (17).

7. The sensor system according to claim 6, wherein the window width (41) in the direction of movement (29) is between 0.8 and 0.9 times the sensor cover section (17).

8. The sensor system according to any one of claims 1 to 7, wherein, with respect to the extent of the window (7), a sensor outer edge (16) and a sensor inner edge (15) are defined by each infrared light sensor (4, 5; 36, 37), and a first window edge (8) directly adjacent to the sensor inner edge (15) and a second window edge (9) directly adjacent to the sensor outer edge (16) are defined by the window (7), wherein the straight line from the sensor inner edge (15) to the first window edge (8) and the sensor normal (25) enclose a first angle (26), and the sensor normal (25) and the straight line from the sensor outer edge (16) to the second window edge (9) enclose a third angle (28), wherein the difference between the absolute value of the first angle (26) and the absolute value of the third angle (28) is larger than twice the absolute value of the third angle (28).

9. The sensor system according to claim 8, wherein the difference between the absolute value of the first angle (26) and the absolute value of the third angle (28) is between twice and four times the absolute value of the third angle (28).

10. The sensor system according to any one of claims 1 to 9, wherein, with respect to the extent of the window (7), a sensor outer edge (16) and a sensor inner edge (15) are defined by each infrared light sensor (4, 5; 36, 37), and a first window edge (8) directly adjacent to the sensor inner edge (15) and a second window edge (9) directly adjacent to the sensor outer edge (16) are defined by the window (7), wherein the straight line from the sensor inner edge (15) to the second window edge (9) and the sensor normal (25) enclose a second angle (27), and the sensor normal (25) and the straight line from the sensor outer edge (16) to the second window edge (9) enclose a third angle (28), wherein the absolute value of the third angle (28) is between zero and the absolute value of the second angle (27).

11. The sensor system according to claim 10, wherein the absolute value of the third angle (28) is between zero and 0.5 times the absolute value of the second angle (27).

12. The sensor system according to any one of claims 1 to 11, wherein the sensor system (1) comprises two pairs of infrared light sensors each consisting of two of the infrared light sensors (4, 5; 36, 37) and the window (7) is rectangular, behind which the infrared light sensors (4, 5; 36, 37) are arranged as an array symmetrically to the window (7), wherein the infrared light sensors (4, 5) of one pair of infrared light sensors are arranged on the one diagonal of the window (7) and the infrared light sensors (4, 5) of the other pair of infrared light sensors are arranged on the other diagonal of the window (7), so that either the one diagonal or the other diagonal define the direction of movement (29).

13. The sensor system according to any one of claims 1 to 12, wherein the sensor system (1) comprises a membrane (2) and a frame (3), wherein the frame (3) delimits the membrane (2) and the membrane (2) is spanned by the frame (3), wherein the infrared light sensors (4, 5; 36, 37) are arranged on the membrane (2) next to one another at a distance.

14. The sensor system according to any one of claims 1 to 13, wherein the infrared light sensors (4, 5; 36, 37) and the window (7) are adapted such that, when the infrared light source (29) is a human hand, the infrared light sensors (4, 5; 36, 37) make the electrical signals available for detecting the movement of the hand when irradiated with the hand.

## Revendications

1. Système de détection permettant de détecter un mouvement dans une direction de mouvement (30) prédéfinie d'une source de lumière infrarouge (29), comprenant au moins une paire de capteurs de lumière infrarouge constituée de deux capteurs de lumière infrarouge (4, 5 ; 36, 37) agencés l'un à côté de l'autre par rapport à la direction de mouvement (30) et définissant ainsi un secteur de couverture de détection (17) défini par l'espacement des extrémités (16) opposées des capteurs de lumière infrarouge (4, 5 ; 36, 37) par rapport à la direction de mouvement (29), et conçus de manière à fournir des signaux électriques, dont les signes de charge sont opposés lors de l'irradiation par la source de lumière infrarouge (29), de manière à ce qu'ils puissent être interceptés afin de détecter le mouvement de la source de lumière infrarouge (29), dans lequel le système de détection (1) présente une fenêtre (7) entre les capteurs de lumière infrarouge (4, 5 ; 36, 37) et la source de lumière infrarouge (29), à travers laquelle la lumière infrarouge provenant de la source de lumière infrarouge (29) peut être dirigée vers les capteurs de lumière infrarouge (4, 5 ; 36, 37) et derrière laquelle sont agencés les capteurs de lumière infrarouge (4, 5; 36, 37), et leur agencement et leur extension dans la direction de mouvement (30) sont adaptés à la largeur (41) de la fenêtre (7) de telle manière que, au-delà d'un espacement limite (20) prédéfini par rapport à la fenêtre (7), les capteurs de lumière infrarouge (4, 5 ; 36, 37) présentent respectivement une zone d'éclairement total (22, 23) qui définit les endroits à partir desquels la source de lumière infrarouge (29) éclaire complètement un seul des capteurs de lumière infrarouge (4, 36 ou 5, 37), dans lequel les zones d'éclairement total (22, 23) ne se chevauchent pas dans l'espace au-delà de l'espacement limite (20), et la largeur de fenêtre (41) dans la direction de mouvement (30) est inférieure au secteur de couverture de détection (17), dans lequel les capteurs de lumière infrarouge (4, 5 ; 36, 37) sont de nature pyroélectrique et sont polarisés de manière opposée.

2. Système de détection selon la revendication 1, dans lequel le secteur de couverture de détection (17) dépasse de la fenêtre (7) des deux côtés et sur la même longueur.

3. Système de détection selon la revendication 1 ou 2, dans lequel les capteurs de lumière infrarouge (4, 5 ; 36, 37) sont conçus de telle manière que les signaux sont d'intensité égale pour une irradiation d'intensité égale par la source de lumière infrarouge (29).

4. Système de détection selon l'une quelconque des revendications 1 à 3, dans lequel les capteurs de lumière infrarouge (4, 5 ; 4, 37) présentent du titano-zirconate de plomb.

5. Système de détection selon l'une quelconque des revendications 1 à 4, dans lequel les capteurs de lumière infrarouge (4, 5 ; 36, 37) présentent respectivement un conducteur de signal (10, 11 ; 38, 39) avec lequel les signaux électriques des capteurs de lumière infrarouge (4, 5 ; 36, 37) peuvent être interceptés, dans lequel les conducteurs de signal (10, 11 ; 38, 39) sont raccordés à un conducteur de collecte de signaux (12, 40) du Système de détection (1) .

6. Système de détection selon l'une quelconque des revendications 1 à 5, dans lequel la largeur de fenêtre (41) dans la direction de mouvement (29) est comprise entre 0,7 et 1 fois le secteur de couverture de détection (17) .

7. Système de détection selon la revendication 6, dans lequel la largeur de fenêtre (41) dans la direction de mouvement (29) est comprise entre 0,8 et 0,9 fois le secteur de couverture de détection (17).

8. Système de détection selon l'une quelconque des revendications 1 à 7, dans lequel un bord extérieur de capteur (16) et un bord intérieur de capteur (15) sont définis par chaque capteur de lumière infrarouge (4, 5 ; 36, 37) par rapport à l'extension de la fenêtre (7), et un premier bord de fenêtre (8) immédiatement adjacent au bord intérieur de capteur (15) et un second bord de fenêtre (9) immédiatement adjacent au bord extérieur de capteur (16) sont définis par la fenêtre (7), dans lequel la droite allant du bord intérieur de capteur (15) jusqu'au premier bord de fenêtre (8) et la normale de capteur (25) forment un premier angle (26), et la normale de capteur (25) et la droite allant du bord extérieur de capteur (16) jusqu'au second bord de fenêtre (9) forment un troisième angle (28), dans lequel la différence entre la valeur absolue du premier angle (26) et la valeur absolue du troisième angle (28) est supérieure au double de la valeur absolue du troisième angle (28).

9. Système de détection selon la revendication 8, dans lequel la différence entre la valeur absolue du premier angle (26) et la valeur absolue du troisième angle (28) est comprise entre le double et le quadruple de la valeur absolue du troisième angle (28).

10. Système de détection selon l'une quelconque des revendications 1 à 9, dans lequel un bord extérieur de capteur (16) et un bord intérieur de capteur (15) sont définis par chaque capteur de lumière infrarouge (4, 5 ; 36, 37) par rapport à l'extension de la fenêtre (7), et un premier bord de fenêtre (8) immédiatement adjacent au bord intérieur de capteur (15) et un deuxième bord de fenêtre (9) immédiatement adjacent au bord extérieur de capteur (16) sont définis par la fenêtre (7), dans lequel la droite allant du bord intérieur de capteur (15) jusqu'au deuxième bord de fenêtre (9) et la normale de capteur (25) forment un deuxième angle (27) et la normale de capteur (25) et la droite allant du bord extérieur de capteur (16) jusqu'au deuxième bord de fenêtre (9) forment un troisième angle (28), dans lequel la valeur absolue du troisième angle (28) est comprise entre zéro et la valeur absolue du deuxième angle (27).

11. Système de détection selon la revendication 10, dans lequel la valeur absolue du troisième angle (28) est comprise entre zéro et 0,5 fois la valeur absolue du deuxième angle (27).

12. Système de détection selon l'une quelconque des revendications 1 à 11, dans lequel le système de détection (1) présente deux paires de capteurs de lumière infrarouge constituées de respectivement deux des capteurs de lumière infrarouge (4, 5 ; 36, 37) et la fenêtre (7), derrière laquelle les capteurs de lumière infrarouge (4, 5 ; 36, 37) sont agencés sous forme d'un réseau de manière symétrique par rapport à la fenêtre (7), est rectangulaire, dans lequel les capteurs de lumière infrarouge (4, 5) de l'une des paires de capteurs de lumière infrarouge sont agencés sur une diagonale de la fenêtre (7) et les capteurs de lumière infrarouge (4, 5) de l'autre paire de capteurs de lumière infrarouge sont agencés sur l'autre diagonale de la fenêtre (7), de sorte que l'une ou l'autre diagonale définit la direction de mouvement (29).

13. Système de détection selon l'une quelconque des revendications 1 à 12, dans lequel le système de détection (1) présente une membrane (2) et un cadre (3), dans lequel le cadre (3) délimite la membrane (2) et la membrane (2) est tendue par le cadre (3), dans lequel les capteurs de lumière infrarouge (4, 5 ; 4, 5) sont agencés sur la membrane (2) à distance les uns des autres.

14. Système de détection selon l'une quelconque des revendications 1 à 13, dans lequel les capteurs de lumière infrarouge (4, 5 ; 36, 37) et la fenêtre (7) sont conçus de telle manière que, lorsque la source de lumière infrarouge (29) est une main humaine, les capteurs de lumière infrarouge (4, 5 ; 36, 37) fournissent les signaux électriques de manière à ce qu'ils puissent être interceptés afin de détecter le mouvement de la main lors de l'irradiation par la main.
